# EUROPÄISCHE PATENTSCHRIFT

(11) **EP 0 988 249 B1**
(45) Veröffentlichungstag und Bekanntmachung des Hinweises auf die Patenterteilung: **14.03.2001**
(21) Anmeldenummer: 98936313.0
(22) Anmeldetag: 08.06.1998
(51) Int. Cl.: B66F 9/075, B60N 2/14, B60N 2/38

(54) **FRONTGABELSTAPLER MIT SCHWENKBARER FAHRERSITZEINHEIT**
FRONT-END FORK LIFT TRUCK WITH PIVOTABLE DRIVER SEAT UNIT
GERBEUSE A FOURCHE FRONTALE AVEC UNITE DE SIEGE DE CONDUCTEUR PIVOTANTE

(30) Priorität: 12.06.1997 DE 19724702; 03.07.1997 DE 19728312
(43) Veröffentlichungstag der Anmeldung: 29.03.2000
(73) Patentinhaber: Schatz, Werner, 72631 Aichtal (DE)
(72) Erfinder: Schatz, Werner, 72631 Aichtal (DE)
(74) Vertreter: Gallo, Wolfgang, Dipl.-Ing. (FH)
(86) Internationale Anmeldenummer: EP9803418
(87) Internationale Veröffentlichungsnummer: WO9856707

(56) Entgegenhaltungen:
- EP-A- 0 052 967
- DE-A- 3 042 956
- DE-A- 19 650 338
- FR-A- 2 664 556
- GB-A- 1 169 845
- GB-A- 1 376 868
- US-A- 2 387 077
- US-A- 5 346 035

## Beschreibung

Die Erfindung betrifft einen Frontgabelstapler mit schwenkbarer Fahrersitzeinheit.

Dabei bezieht sich die Erfindung speziell auf Frontgabelstapler zum Einsatz in Lagerhallen usw., die zum Manövrieren auf beengtem Raum kurz und wendig und deshalb kompakt gebaut sein müssen. Bei solchen Frontgabelstaplern ist daher auch der verfügbare Raum für den Fahrerplatz zwischen der frontseitig angeordneten Hubgerüst-Lasttrageeinheit und einem die ganze Fahrzeugbreite einnehmenden Heckblockkasten, der die Batterie und/oder andere Antriebskomponenten aufnimmt und zugleich als Gegengewicht dient, ziemlich beengt. Daher ist üblicherweise ein Fahrersitz starr auf dem Heckblockkastendeckel angeordnet.

Da die aufgenommene Last dem Fahrer häufig die Sicht nach vorn versperrt, müssen die meisten Lasttransportfahrten in Rückwärtsfahrt bewerkstelligt werden. Das dazu notwendige ständige Umdrehen des Fahrers auf dem starren Fahrersitz belastet dessen Rücken und Hals und verursacht Ermüdung und gesundheitliche Probleme. Daher wäre es wünschenswert, den Fahrersitz schwenkbar anzuordnen.

Aus der Zeitschrift "Mechanical Handling", März 1969, S. 73, ist es bei einem großen Frontgabelstapler bekannt, in den Zwischenraum zwischen Hubgerüst und Heckblock die gesamte Fahrersitzeinheit, bestehend aus Fahrersitz und Lenk- und Bedienungskonsole, auf einem Drehteller anzuordnen, der nicht nur um eine Hochachse drehbar ist, sondern auch über die Fahrzeugbreite auf dem Fahrgestell verfahrbar ist. Eine Übertragung einer solchen Konstruktion ist aber aus Platzgründen auf hier interessierende kompakte Frontgabelstapler nicht möglich.

Aus der DE-OS 30 42 956 ist ein Vorschlag bekannt, bei einem Frontgabelstapler eine aus Fahrersitz und Lenk- und Bedienungskonsole bestehende Fahrersitzeinheit um 180° schwenkbar anordnen zu können, wobei vorne und hinten jeweils ein gesonderter Pedalsatz vorgesehen ist, der je nach Stellung der Fahrersitzeinheit zu benutzen sein soll. Dabei erstreckt sich der Fahrerplatz fast über die gesamte Fahrzeuglänge auf einer Hälfte der Fahrzeugbreite, während der Batteriekasten auf der anderen Hälfte der Fahrzeugbreite angeordnet ist. Allerdings funktioniert zumindest im Ausführungsbeispiel dieser Vorschlag nicht, da die etwa mittig in der Fahrzeugbreite angeordnete Schwenkachse ein Schwenken der Fahrersitzeinheit wegen des dann im Schwenkweg befindlichen Batteriekastens gar nicht zuläßt. Dieser bekannte Vorschlag ist also zum einen nicht praktikabel und zum anderen auf kompakte Gabelstapler mit sich über die ganze Fahrzeugbreite erstreckendem Heckblock nicht übertragbar.

Schließlich ist aus der Praxis noch ein kompakter Frontgabelstapler bekannt (Fa. Linde, Typ E 25 "Panorama"), wo der Fahrersitz mittels eines unter der Sitzfläche angeordneten Drehgestells um eine Hochachse um 45° verschwenkbar ist. Eine am Fahrersitz angeordnete Bedienungskonsole für die Lasttrageeinheit ist mitverschwenkbar, ein Lenkrad steht fest, und es sind zwei Pedalsätze zur Benutzung in der einen oder anderen Fahrersitzstellung vorgesehen. Bei dieser Konstruktion ist insbesondere problematisch, daß aus Platzgründen der Fahrersitz stark erhöht auf einer Art Zwischendeck angeordnet ist, um die drehbare Anordnung zu ermöglichen. Daher läst sich dieser bekannte Gabelstapler nicht nur schwer besteigen, sondern hat wegen des relativ hochliegenden Schwerpunkts auch eine geringere Kippstabilität, der Fahrer kann mit den Füßen an den vielen Pedalen hängenbleiben, und die Lenkradposition ist in keiner der beiden Sitzpositionen optimal.

Der Erfindung liegt die Aufgabe zugrunde, bei einem kompakten Frontgabelstapler eine schwenkbare Fahrersitzeinheit vorzusehen, die zumindest keine wesentliche Erhöhung der Sitzposition erfordert.

Diese Aufgabe wird erfindungsgemäß durch die im Anspruch 1 angegebene und in den Unteransprüchen vorteilhaft weiter ausgestaltete Konstruktion gelöst.

Die erfindungsgemäße Konstruktion mit einer unmittelbar vor der Frontwand des Heckblockkastens angeordneten Schwenksäule, dem daran oben nach hinten direkt über den Heckblockkasten auskragenden Fahrersitz und der im unteren Bereich daran angeordneten Fußkonsole umfaßt den Fahrersitz mit allen vom Fahrer zu betätigenden Lenk- und Bedienungselementen in Form einer insgesamt schwenkbaren Einheit, die auf die Platzverhältnisse kompakter Frontgabelstapler herkömmlicher Konstruktion abgestimmt ist und wegen des von der Säule über den Heckblockkasten auskragenden und somit in nur geringer Distanz direkt über diesem liegenden Fahrersitz keine nennenswert erhöhte Sitzposition erfordert.

Ein Ausführungsbeispiel des erfindungsgemäßen Frontgabelstaplers wird nachstehend unter Bezugnahme auf die anliegenden Zeichnungen mehr im einzelnen beschrieben, in denen zeigt:
- Fig. 1: einen Frontgabelstapler nach der Erfindung in Seitenansicht,
- Fig. 2: die schwenkbare Fahrersitzeinheit des Frontgabelstaplers nach Fig. 1, und
- Figuren 3a, 3b und 3c: Draufsichten des Frontgabelstaplers nach Fig. 1 mit der Fahrersitzeinheit in Normalstellung bzw. nach der einen bzw. der anderen Seite verschwenkt.

Der in den Zeichnungen dargestellte Gabelstapler 10 weist ein Fahrgestell 12 mit einer Fahrerkabine 14 mit einer schwenkbar angeordneten Fahrersitzeinheit 34 und eine frontseitig angeordnete Lasttrageeinheit 16 mit Hubgerüst und Hubgabel auf. Am Fahrgestell 12 sind weiter zwei Vorderräder 18, zwei lenkbare Hinterräder 20 und ein Heckblockkasten 22 mit aufklappbarem Deckel 24 angeordnet. Der Gabelstapler 10 wird mittels eines nicht dargestellten Elektromotors angetrieben, der aus einer Batterie 26 gespeist wird, die im Heckblockkasten 22 untergebracht ist und außerdem als Gegengewicht für von der Lasttrageeinheit 16 aufgenommene Lasten dient.

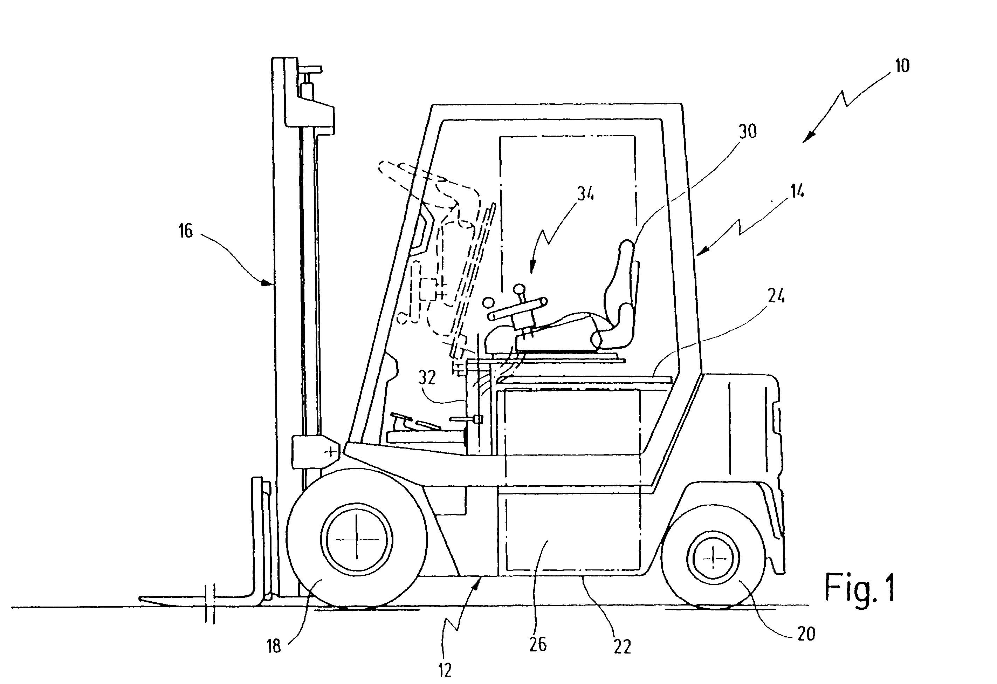

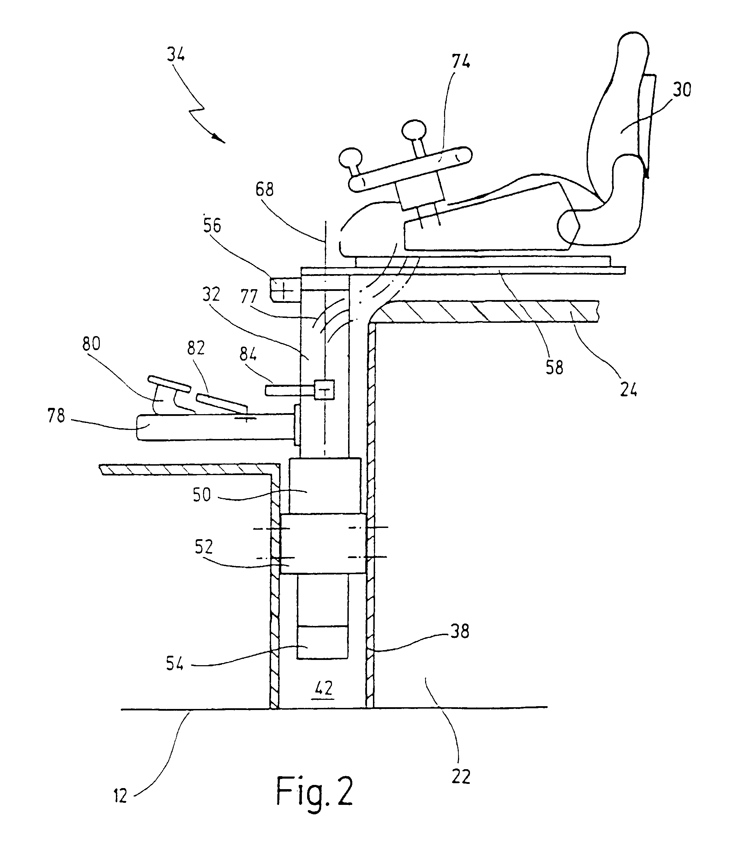

Die in der Fahrerkabine 14 angeordnete schwenkbare Fahrersitzeinheit 34 ist in Fig. 2 in ihren Einzelheiten dargestellt. Sie weist zunächst eine vertikale Säule 32 auf, die vorderhalb einer Vorderwand 38 des Heckblockkastens 22 angeordnet und in einer im Fahrgestell 12 gebildeten Vertiefung 42 in einem Lagerbock 52 mit einem Kugellager 50 um eine Drehachse 68 drehbar ist. Am oberen Ende der Säule 32 ist auf einer rückwärts über den Deckel 24 des Heckblockkastens 22 auskragenden Sitzkonsole 58 ein Fahrersitz 30 angeordnet. Die Sitzkonsole 58 ist um ein Scharniergelenk 56 mit horizontaler Achse hochklappbar (in Fig. 1 gestrichelt dargestellt), um den Deckel 24 öffnen und die Batterie 26 warten zu können.

An der Sitzkonsole 58 sind im Bereich einer linken Armlehne ein Lenkrad 74 zum Lenken der Räder und im Bereich einer rechten Armlehne ein Joystick 76 zur Steuerung der Lasttrageeinheit 16 angeordnet. Lenkrad 74 und Joystick 76 sind als Signalgeber für elektrische oder hydraulische Steuersignale ausgebildet.

Im unteren Bereich der Säule 32 ist an dieser eine Fußkonsole 78 mit einem Fahrpedal 82 und einem Bremspedal 80 angeordnet. Die Säule 32 ist als Hohlsäule ausgebildet und dient als Leitungsführungsrohr zum Führen der elektrischen bzw. hydraulischen Leitungen zwischen Lenkrad 74, Joystick 76, den Pedalen 80 und 82 und den zugeordneten Lenk- und Steuerorganen. Eine Drehdurchführung 54 am unteren Ende der Hohlsäule 32 verbindet die in der Hohlsäule 32 verlaufenden hydraulischen Leitungen mit ortsfesten hydraulischen Leitungen. Hydraulische Leitungen, insbesondere die Hydraulikleitung vom Bremspedal 80, können auch direkt weitergeführt werden, wobei lediglich eine den Drehbereich ermöglichende Leitungsschleife einer flexiblen Leitung vorgesehen sein muß. In Fig. 2 sind die in die Hohlsäule 32 hinein geführten Leitungen von Lenkrad 74 und Joystick 76 schematisch strichpunktiert angedeutet und mit 77 bezeichnet.

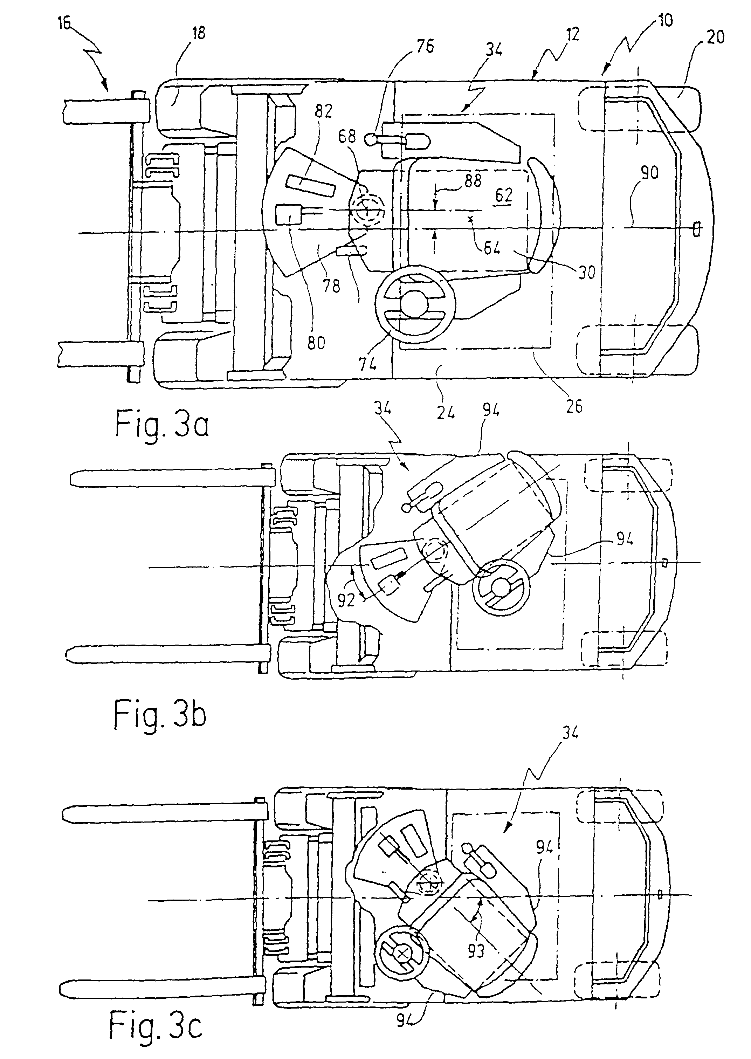

In der Draufsicht nach Fig. 3a ist ersichtlich, daß die schwenkbare Fahrersitzeinheit 34 mit Bezug auf die Längsmittellinie 90 des Gabelstaplers 10 etwas nach rechts versetzt ist. Die Fahrersitzeinheit ist dort in ihre Normalstellung, d.h. parallel zur Längsmittellinie 90 des Gabelstaplers 10 ausgerichtet. Durch den seitlichen Versatz der Fahrersitzeinheit und insbesondere der Drehachse 68 der Säule 32 von der Längsmittellinie 90 des Gabelstaplers wird erreicht, daß die Fahrersitzeinheit 34 im Gegenuhrzeigersinn (Fig. 3b) um einen kleineren Winkel 92, im Uhrzeigersinn (Fig. 3c) jedoch um einen größeren Winkel 93 schwenkbar ist, ohne daß irgendein Teil über die Außenkontur übersteht. Zur Maximierung des jeweiligen Schwenkwinkels haben die Armlehnen Abschrägungen 94.

Die schwenkbare Fahrersitzeinheit ist in den in den Fig. 3a, 3b und 3c dargestellten Drehstellungen jeweils verriegelbar. Ein Rasthebel 84 (in Fig. 2 sichtbar) an der Säule 32 dient zum Entriegeln aus der jeweiligen Raststellung.

## Patentansprüche

1. Frontgabelstapler, auf dessen Fahrgestell (12) zwischen einer frontseitigen Hubgerüst-Lasttrageeinheit (16) und einem zur Aufnahme von Batterie bzw. Antriebskomponenten und als Gegengewicht dienenden Heckblockkasten (22) ein Fahrerplatz (14) angeordnet ist, der eine um eine Hochachse (68) schwenkbare Fahrersitzeinheit (34) mit folgenden Merkmalen aufweist:
- eine im wesentlichen vertikale Säule (32) ist vorderhalb einer Vorderwand (38) des Heckblockkastens (22) angeordnet und it ihrem unteren Endbereich in einem im Fahrgestell (12) eingebauten Drehlager (36, 50) drehbar gelagert;
- am oberen Ende der Säule (32) ist ein Fahrersitz (30, 58) nach hinten über den Heckblockkasten (22) auskragend angeordnet,
- im unteren Bereich der Säule (32) ist oberhalb des Drehlagers (36, 50) eine Fußkonsole/Pedaleinheit (78) angeordnet, und
- an der schwenkbaren Fahrersitzeinheit sind (34) Lenk- und Steuerorgane (74, 76) zum Lenken der Räder des Gabelstaplers bzw. zum Steuern der Funktionen der Hubgabel-Lasttrageeinheit (16) angeordnet.

2. Frontgabelstapler nach Anspruch 1, dadurch gekennzeichnet, daß die Säule (32) als Hohlsäule ausgebildet ist und als Leitungsführungsrohr zum Führen elektrischer und/oder hydraulischer Leitungen zwischen an der schwenkbaren Fahrersitzeinheit (34) angeordneten Pedalen, Lenk- und Steuerorganen und anderen Komponenten des Gabelstaplers dient.

3. Frontgabelstapler nach Anspruch 1 oder 2, dadurch gekennzeichnet, daß die Lenk- und/oder Steuerorgane (74, 76) jeweils seitlich am Fahrersitz (30, 58) angeordnet sind.

4. Frontgabelstapler nach einem der Ansprüche 1 bis 3, dadurch gekennzeichnet, daß der Fahrersitz (30, 58) an seinem Vorderkantenbereich über ein Scharniergelenk (56) mit horizontaler Gelenkachse hochschwenkbar an der Säule (32) angebracht ist.

5. Frontgabelstapler nach einem der Ansprüche 1 bis 4, dadurch gekennzeichnet, daß lösbare Rastorgane (84) zum lösbaren Einrasten der schwenkbaren Fahrersitzeinheit (34) in bestimmten Positionen vorgesehen sind.

6. Frontgabelstapler nach einem der Ansprüche 1 bis 5, dadurch gekennzeichnet, daß die Säule (32) etwas seitlich mit Bezug auf die Längsmittenachse (90) des Frontgabelstaplers und des Fahrersitzes (30, 58) versetzt angeordnet ist und der Schwenkwinkel der Fahrersitzeinheit aus der Mittenposition nach der einen und der anderen Seite unterschiedlich ist.

## Claims

1. Front fork lift truck, on the chassis (12) of which, between a front lifting frame load-bearing unit (16) and a rear block box (22) to hold the battery or drive components and which serves as a counterweight, is arranged a driver's cab (14) which has a driver's seat unit (34) swivellable about an upright axis (68) with the following features:
- a substantially vertical column (32) is arranged in front of a front wall (38) of the rear block box (22), with its lower end area rotatably mounted in a pivot bearing (36, 50) integrated in the chassis (12);
- at the upper end of the column (32) is arranged a driver's seat (30, 58) projecting to the rear over the rear block box (22);
- in the lower area of the column (32), above the pivot bearing (36, 50), is arranged a foot console / pedal unit (78), and
- arranged on the swivellable driver's seat unit (34) are steering and control elements (74, 76) for steering the wheels of the fork lift truck and controlling the functions of the lifting gear load-bearing unit (16).

2. Front fork lift truck according to claim 1, characterised in that the column (32) is formed as a hollow column and serves as a line routing tube for routing the electrical and/or hydraulic lines between the pedals, steering and control elements arranged on the swivellable driver's seat unit (34) and other components of the fork lift truck.

3. Front fork lift truck according to claim 1 or 2, characterised in that the steering and/or control elements (74, 76) are each arranged at the side of the driver's seat (30, 58).

4. Front fork lift truck according to any of claims 1 to 3, characterised in that the driver's seat (30, 58) is mounted on the column (32) so as to swivel upwards at its front edge area by way of a hinge joint (56) with a horizontal axis of articulation.

5. Front fork lift truck according to any of claims 1 to 4, characterised in that releasable locking elements (84) are provided for releasable locking of the swivellable driver's seat unit (34) in certain positions.

6. Front fork lift truck according to any of claims 1 to 5 characterised in that the column (32) is arranged slightly offset to the side in relation to the longitudinal centre axis (90) of the front fork lift truck and driver's seat (30, 58), and the swivel angle of the driver's seat unit from the centre position is different from one side to the other.

## Revendications

1. Gerbeuse à fourche frontale comprenant sur son châssis (12), entre une unité (16) frontale de support de charge à tablier de levage et un bac arrière (22) recevant la batterie et les composants de propulsion et servant de contre-poids, un emplacement de conducteur (14) qui présente une unité de siège de conducteur (34) pivotant autour d'un axe vertical (68) et ayant les caractéristiques suivantes:
- une colonne (32) essentiellement verticale est disposée en avant d'une paroi avant (38) du bac arrière (22), sa partie d'extrémité inférieure étant montée en rotation dans un palier d'orientation (36,52) disposé dans le châssis (12),
- un siège de conducteur (30, 58) est disposé à l'extrémité supérieure de la colonne (32), en porte-à-faux vers l'arrière au-dessus du bac arrière (22),
- une unité (78) de console pour les pieds/pédales est disposée dans la partie inférieure de la colonne (32) au-dessus du palier d'orientation (36, 50), et
- des organes de pilotage et de commande (74, 76) pour le pilotage des roues de la gerbeuse et pour la commande des fonctions de l'unité (16) de support de charge à tablier de levage sont disposés sur l'unité de siège de conducteur (34) pivotante.

2. Gerbeuse à fourche frontale suivant la revendication 1, caractérisée par le fait que la colonne (32) est une colonne creuse et sert de tube de guidage de conduites pour le guidage de conduites électriques et/ou hydrauliques entre les pédales, organes de pilotage et de commande disposés sur l'unité de siège de conducteur (34) pivotante et d'autres composants de la gerbeuse à fourche.

3. Gerbeuse à fourche frontale suivant la revendication 1 ou 2, caractérisée par le fait que les organes de pilotage et/ou de commande (74, 76) sont disposés respectivement latéralement sur le siège de conducteur (30, 58).

4. Gerbeuse à fourche frontale suivant l'une des revendications 1 à 3, caractérisée par le fait que le siège de conducteur (30, 58) est monté dans la zone de son bord avant par une articulation à charnière (56) à axe d'articulation horizontal de façon relevable par pivotement sur la colonne (32).

5. Gerbeuse à fourche frontale suivant l'une des revendications 1 à 4, caractérisée par le fait que des organes de verrouillage (84) libérables sont prévus pour le verrouillage libérable de l'unité de siège de conducteur (34) pivotante dans des positions déterminées.

6. Gerbeuse à fourche frontale suivant l'une des revendications 1 à 5, caractérisée par le fait que la colonne (32) est disposée avec décalage latéral par rapport à l'axe médian longitudinal (90) de la gerbeuse et du siège de conducteur (30, 58) et que les angles de pivotement de l'unité de siège de conducteur à partir de la position médiane sont différents vers un côté et vers l'autre.
